Europäisches Patentamt

European Patent Office

Office européen des brevets

(11) Veröffentlichungsnummer: **0 397 923**
**A2**

## (12) EUROPÄISCHE PATENTANMELDUNG

(21) Anmeldenummer: **89200880.6**

(51) Int. Cl.5: **C09D 5/03**

(22) Anmeldetag: **18.05.89**

| | |
|---|---|
| Die Bezeichnung der Erfindung wurde geändert (Richtlinien für die Prüfung im EPA, A-III, 7.3). | (71) Anmelder: **DUROPLAST Powder-Chemie N.V.** **Europarklaan 79F** **B-3530 Houthalen(BE)** |
| (43) Veröffentlichungstag der Anmeldung: **22.11.90 Patentblatt 90/47** | (72) Erfinder: **Weigel, Kurt** **Buchenweg 1** **D-7529 Forst(DE)** |
| (84) Benannte Vertragsstaaten: **BE ES FR GB IT** | |
| | (74) Vertreter: **Liermann, Manfred** **Josef-Schregel-Strasse 19** **D-5160 Düren(DE)** |

(54) **Verfahren zur Herstellung von Pulverlacken.**

(57) Die Erfindung betrifft eine Ergänzung zum Pulverlack-Herstellungsverfahren zur Optimierung und Verleihung neuartige Pulverlackeigenschaften. Das Verfahren gestaltet sich derart, daß nach dem bekannten Mischen der erforderlichen Rohstoffe diese Mischung ebenfalls wie bekannt über den Extruder extrudiert wird. Nach Verlassen der Schmelzmasse bis hin zum bekannten Mahlprozeß wird erfindungsgemäß mittels einer gesonderten Vorrichtung eine entsprechende Flüssigkeit oder Flüssigkeit-Feststoffgemisch aufgebracht. Hieraus resultieren Pulver- wie -Filmeigenschaften, wie Erhöhung der chemisch-thermischen Reaktivität, d.h. Reduzierung der Einbrenneigenschaften aufgesprühter Pulverschichten, Erhöhung der elektrischen Leitfähigkeit zur Verarbeitung nach dem Triboverfahren, Veränderung der elektrischen Filmeigenschaften zwecks Funkfrequenz-Abschirmung, Erzeugung von Filmeigenschaften zur Ableitung elektrostatischer Aufladung.

Figur 1        Figur 2        Figur 3        Figur 4

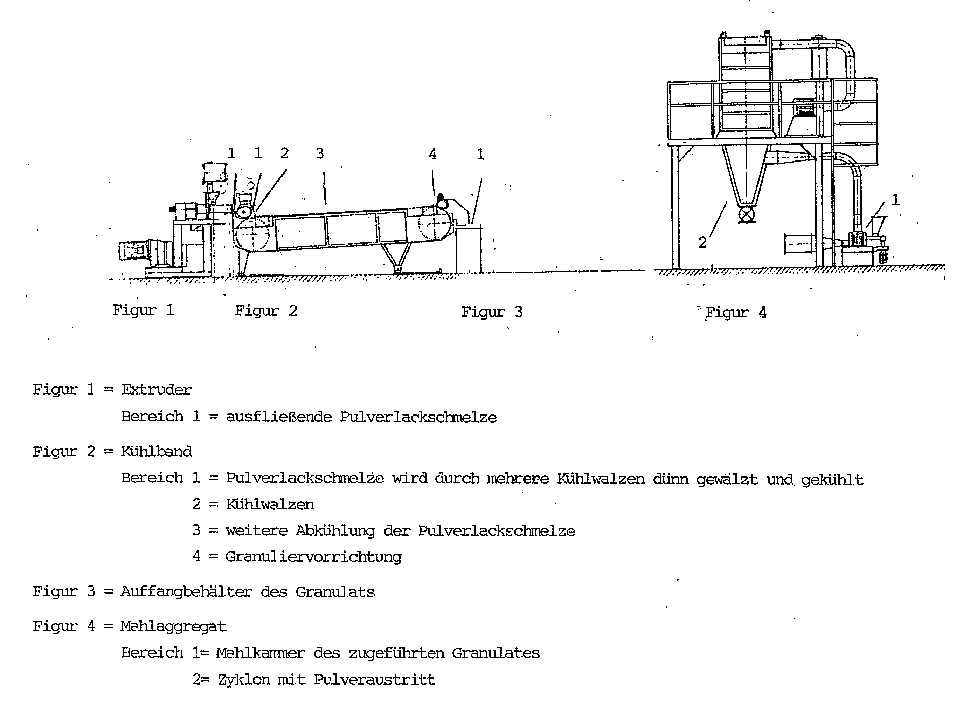

Figur 1 = Extruder
    Bereich 1 = ausfließende Pulverlackschmelze

Figur 2 = Kühlband
    Bereich 1 = Pulverlackschmelze wird durch mehrere Kühlwalzen dünn gewalzt und gekühlt
        2 = Kühlwalzen
        3 = weitere Abkühlung der Pulverlackschmelze
        4 = Granuliervorrichtung

Figur 3 = Auffangbehälter des Granulats

Figur 4 = Mahlaggregat
    Bereich 1= Mahlkammer des zugeführten Granulates
        2= Zyklon mit Pulveraustritt

EP 0 397 923 A2

## Verfahren zur Herstellung von Pulverlacken mit außergewöhnlichen Eigenschaften.

Die Erfindung betrifft ein Verfahren, wonach es möglich ist, Pulverlacke mit Eigenschaften zu versehen, die nach dem derzeitigen Stand der Herstellungstechnik nicht möglich ist, aber für die Beschichtung bzw. -technologie von außerordentlicher Wichtigkeit ist.

Pulverlacke werden hergestellt durch mischen der Grundsubstanzen wie Harze, Härter, Verlaufmittel, Pigmente, Füllstoffe und teilweise Additive zur Verminderung der Wärmevergilbung, der Nadelstichbildung, der Reduzierung der Einbrenntemperaturen der aufgetragenen Beschichtungsmasse, der Möglichkeit zur Beschichtung nach dem Tribo-Verarbeitungsverfahren.

Das Gemisch muß in einer Form vorliegen, daß ein homogenes mischen möglich ist, d.h. die Megenzugabe an Rohstoffen in flüssiger Form ist begrenzt. Nach Fertigstellung des Gemisches wird dieses dann einem Extruder zugeführt. Die schmelzbaren Anteile des Gemisches werden im Bereich ihres Erweichungspunktes im Extruder geschmolzen, die nichtschmelzbaren Anteile durch Einwirkung der rotierenden Extruderschnecke in den schmelzbaren Anteil eingearbeitet. Die hier geforderten Temperaturen liegen je nach Einsatz des Harzes bei 90 bis $120_0$C; die je nach verwendetem Extrudertyp auftretende Friktionswärme liegt im Bereich der Schnecke unter Umständen um $20_0$C höher. Die Möglichkeit der Zuführung bestimmter flüssiger Additive ist bei manchen Extrudertypen (z.B. BUSS-Ko-Kneter) in der Extrudierzone möglich. Je nach Art der Zugabe kann dieses Additiv in der Verweilzone länger oder kürzer verbleiben. Auf alle Fälle wird ein derartiges Additiv gleichmäßig im späteren Korn auffindbar sein. Nach Austragung der Schmelze aus dem Extruder wird diese sofort flach ausgewalzt über ein oder mehrere Kühlwalzen und auf ein anschließendes Kühlband auf Zimmertemperatur angekühlt. Die abgekühlte und somit erstarrte endlose flächenförmige Masse wird möglichst in gleichmäßigen Stücken granuliert um ein optimales Gut bei nachfolgendem Mahlvorgang daraus herstellen zu können. Nach dem Mahlvorgange wird das pulvrige Mahlgut häufig über 120 Mikron abgesiebt. In dieser Form wird das Pulver mittels speziellen Verarbeitungsgeräten auf dem Beschichtungsgegenstand aufgesprüht und zwecks Filmbildung und chemischer Vernetzung in einem Ofen bei 165 bis $240_0$C ca. 20 bis 5 Minuten Objekttemperatur eingebrannt.

Viele Beschichtungsgegenstände bildeten aufgrund der geometrischen Form einen FARADAY-Käfig bei der elektrostatischen Verarbeitung und konnten nur so unvollständig, oder mit sehr hohem technischen Aufwand und überhöhten Pulververbrauch beschichtet werden. Viele Gegenstände mußten aber aux diesen Gründen gänzlich ausscheiden. Die besondere Einstellung für das tribo-Verfahren nach der Offenlegungsschruft DE 36 00 395 A 1 brachte erhebliche Verbesserungen. Der Wunsch nach weiterer Optimierung entsprechender sog. Tribopulverlacke seitens der Verarbeiter wird gefordert.

Keine befriedigende Lösung konnte in Richtung der Einbrenntemperatur der Beschichtungsmasse bis heute erbracht werden. Ausgehend von dem vorher genannten Pulverherstellungsprozeß benötigt man auf dem Extruder Temperaturen, die, versehen mit einer Tolleranzgrenze, die untere Grenze der Einbrenntemperatur der Pulverbeschichtung setzt, sofern man die Stoffe zur Temperaturreduzierung der Rohstoffmischung wie bisher beigibt. D.h., es sind Katalysatoren bekannt; es werden zum Teil bestimmte Produkte eingesetzt, die aber höchstens eine Einbrennreduzierung ohne verlängerter Einbrennzeit der Beschichtungsmasse auf ca. $165_0$C zulassen, mit zum Teil erheblich verschlechterten Filmverlaufeigenschaften. Da diese Katalysatoren im Pulverlacksystem ferner keine festen Anspringtemperaturen in dieser Temperaturgrößenordnung erbringen, sondern be reits im Bereich der Zimmertemperaturen liegen, heißt dies, verkürzte Lagerzeiten und in den Sommermonaten Schwierigkeiten u.a. auf dem Versandweg durch erhöhte Wärmeeinwirkung. Die Produktion solcher Pulverlacke ist schwierig, nicht selten reagiert eine derartige masse bereits im Extruder. Gelteilartige Anteile verunreinigen später den Film.

Übersieht man auch alle diese Schwierigkeiten, ist es trotzdem nicht möglich, Pulverlacke herzustellen, die im annähernden Bereich des Erweichungspunktes des eingesetzten Harzes ihre Aushärtungstemperatur ohne Verlängerung der üblichen Aushärtezeit der Beschichtung hat. Somit bleibt ein Großteil von Beschichtungsgegenständen der umweltschonenden Pulverlacktechniologie verschlossen. Wie wichtig aber gerade diese letzten Größen (Tribo-Verarbeitung und Temperaturreduzierung) sind, sollen die nachfolgenden Ausführungen belegen.

Unweltbelastungen durch organische Lösemittel (hauptsächlich Kohlenwasserstoffe) können durch Umstellung der Oberflächenveredelung von sog. Naßlacken auf Pulverlacken erzielt werden, wenn die derzeitige Pulverlacktechnologie weiterentwickelt wird und zwar in folgenden Punkten:

    1. Herstellung von dekorativen Oberflächen

        a) sehr glatter Verlauf

        b) stippenfreie Filmoberflächen

    2. Möglichkeit der Pulverbeschichtung auch an geometrisch sehr schwierigen Beschichtungsteilen.

3. Reduzierung der Einbrennbedingungen bei thermisch labilen Beschichtungsgegenständen.

4. Ausschußreduzierung mit Erleichterungen in der Wiederingsandsetzung.

Folgende Lacktypen und Verdünnungen könnten ersetzt werden:

| | |
|---|---|
| Alkydharzlacke | 174.729 To |
| Zelluloselacke | 60.991 |
| Phenol-, Harnstoff- und Melaminharzlacke | 9.050 |
| ölfreie Polyesterlacke | 62.073 |
| Epoxidharzlacke | 30.261 |
| Polyurethanlacke | 32.363 |
| Verdünnungen | 141.197 |
| | 510.664 to |

Dies entspricht einer unmittelbaren Umweltbelastung von ca. 325.930,oo to organischer Lösemittel. Nicht zu unterschätzen ist die Reduzierung an Formaldehyd-Abspaltung, an Monomeren-Anteilen etc. die hier nicht berücksichtigt wurden. Nach einer Veröffentlichung in PRODUKTION (5.1.1978; Dr.R.KAUB, Abgeordneter im Bayerischen Landtag) gehen jährlich 1,125 Millionen Tonnen Erdöl durch falsche Lackiertechniken verloren. davon belasten wiederum 150000 Tonnen Lack- und Farbenabfälle die Sondermülldeponien. Pulverlacke Stellen die idealsten, umweltfreundlichsten Beschichtungsmaterialien dar. Das Pulverlack-Umsatzvolumen liegt derzeit jährlich bei ca. 20.000 to in der Bundesrepublik Deutschland und nimmt sich somit noch sehr bescheiden aus, gemessen an den Flüssiglacken. Die Gründe:

1. Das elektrostatische Verarbeitungsverfahren ist begrenzt durch den FARADAY-. Käfig. Beschichtungsgegenstände die aufgrund der Geometrie diesen Nachteil besitzen, können nicht wirtschaftlich beschichtet werden.

2. Die Einbrenntemperaturen der Pulverlacke (über 165$_0$C) liegt für viele Beschichtungsgegenstände zu hoch (z.B. Holz und holzartige Gegenstände in der Möbelindustrie, Kunststoffe im KFZ-Bereich).

Durch Reduzierung der Einbrenntemperatur in Punkt 2. werden gleichzeitig noch die Punkte bereinigt, die zur Schadstoffbeseitigung positiv beitragen, d.h. bei zu hohen Einbrenntemperaturen, in der Regel über 180$_0$C, verdampfen teilweise Mengen an Verlaufmittel (hauptsächlich Acrylate), Mattierungsmittel (Polyolefine), Spaltung von Pigmenten, Entstehung von Schwelgas und Crackprodukten.

Auch volkswirtschaftlich kommt noch ein weiterer Punkt hinzu: Die durch-schnittlichen Einbrenntemperaturen bei Pulverlacken liegen bei ca. 200 bis 240$_0$C Umlufterwärmung im Ofen; dies entspricht je nach Reschichtungsmaterialstärke und Einbrennzeit 165 bis 200$_0$C Objekttemperatur. Der derzeitige Pulverlackverbrauch liegt bei ca. 20 000 to/Jahr. Dies entspricht etwa einer Beschichtungsoberfläche von 200 Millionen m$^2$. An benötigter Beschichtungs-Aushärteenergie werden ca. 28.8 Milliarden koal bei 200$_0$C benötigt. Bei 130$_0$C ca. 19,0 Milliarden kcal, d.h. dies wäre eine Einsparung von annähernd 35%. Da die Öfen überwiegend Heizöl als Heizmedium benutzen, heißt dies eine bedeutende Einsparung an wertvollem Rohstoff und Devisen. Nicht Berücksichtigt sind die Lackierteile, die aufgrund des thermischen Verhaltens bisher nicht pulverbeschichtet wurden. bei Einbrenntemperaturen um die 120 bis 130°C kann ein wesentliche Anteil abgelöst werden. Hier hat man allerdings häufig keine Einsparung auf dem Energiesektor, aber an Lösemittel und Kunstharz dagegen beträchtlich. Man rechnet, daß für 1 Kg Lack etwa 2,5 Kg Erdöl benötigt wird. Aus diesen vorliegenden Angaben wird erkennbar, wie wichtig eine Fortentwicklung dieser Technologie ist. Bekannt wurde das Zumischen von Trockensubstanzen wie Aluminiumoxid zum Zweck der Pulververarbeitung nach dem Triboverfahren. Erfolge stellten sich teilweise ein. Der Hauptnachteil war die Trennung des zugeführten, pulvrigen Materials zum Pulverlack beim over spray. Dieses zurückgewonnene Pulver war dann nicht mehr triboverarbeitbar. Es mußte wiederum entsprechend aufbereitet werden, was allerdings nicht so einfach ist, weil die Mengenverhältnisse der Mischung in unterschiedlichen Konzentrationen vorliegen können, je nach Art der Geometrie der Beschichtungsgegenstände und den daraus resultierenden variablen Parametern in der Verarbeitungskabine. Grundsätzlich konnte man aber eine Beeinflussung ders Pulverlackkornes in den elektrischen Eigenschaften feststellen, wenngleich eine wirtschaftliche Nuzung scheiterte. Deutliche Verbesserungen erzielte man, wenn man das Pulverkorn mit einem entsprechendem Auftragsgerät mit einer geeigneten Flüssigkeit überzieht. Die Flüssugkeit muß die Eigenschaft besitzen, daß das hydrophobe Pulverlackkorn nicht angelöst wird, aber Adhäsionskräfte besitzt, daß es während der Verarbeitung und in der Rückgewinnungsanlage durch die kinetische Energie nicht angeschleudert wird, ferner eine gewisse Rieselfähigkeit behält, damit eine einwandfreie Verarbeitung möglich ist. Eine wirtschaftliche Nutzung sollte hier möglich sein, obwohl es schwierig ist ohne Verklumpungen eine derartiges Material beim Verarbeiter herzustellen. Sprühmenge, Sprühstrahl und Zeit sind wichtige Parameter um ein funktionsfähiges Material zu bekommen.

Aus all diesen vorgenannten Erfahrungen wurde nun erfindungsgemäß ein Verfahren entwickelt, daß die Eigenschaftveränderungen des Pulverlackkornes nicht beim verarbeiter vornimmt, sondern vorteilhafter beim Pulverlackhersteller. Hier erfolgt dann auch nicht die Additiv-Besprühung des fertigen Pulverlackkornes, sondern bereits das Granulat. Dadurch entfällt das zusätzliche trennen von aufgetretenen Klümpchen durch die Besprühung durch einen zusätzlichen Siebvorgang. Das besprühte Granulat wird dann wie bisher vermahlen. Die gleichmäßige Verteilung und die Heranbringung der Additiv-Flüssigkeit an die Hüllfläche des Pulverkornes wird durch den Mahlvorgang besonders vorteilhaft gefördert.

In den nachfolgenden Ausführungen nun die Beschreibung einiger wichtiger Pulverlack-Eigenschaftveränderungen nach dem erfindungsgemäßen Verfahren.

## Triboabscheidbare Pulverlacke

Triboabscheidbarfähige Pulverlacke sind häufig immer noch mangelhaft in ihrer Reibungsaufladung (siehe K.WEIGEL: Triboabscheidbare Polyester-Epoxidharz- und Polyester-TGIC-Pulverlacke, METALLOBERFLÄCHE 42(1988),April) und vorallem der Aufrechterhaltung der zeitlichen Ladungstrennung. Höhere Zugaben an flüssigen Additiven zur Beeinflussung der elektro-physikalischen Eigenschaften könnten zum Erfolg führen, wenn dadurch nicht Produktionsschwierigkeiten auftreten würden, speziell beim Extrudieren und bei der Vormischung. Die Additiv-Konzentration müßte durch das derzeitige Herstellungsverfahren verhältnismäßig hoch liegen um die Hüllfläche des Pulverlackkornes entsprechend zu beeinflussen. D.h. das Pulverkorn ist durchtränkt mit dem Additiv und wird daher zusätzlich auch in der Lagerfähigkeit nachteilig beeinflußt. Um etwa gleiche Ladungswerte zu erhalten, benötigt man bei dem derzeitigen Herstellungsverfahren etwa eine 3x größere Menge an Additiv als beim Besprühungsverfahren des Granulates. Der "Spannungszustand" nach der Reibungsaufladung bis zum Ladungsausgleich dauert beim Besprühungsverfahren des Granulates zeitlich länger und ist somit günstiger bei der Verarbeitung. Pulverabrieselungen finden weniger statt.

Wird zur Herstellung von Triborezepturen nach der vorgenannten Veröffentlichung vorgegangen, d.h. bereits Rohstoffe verwendet die möglichst von der Natur des Materials bereits positive Reibungsaufladungswerte ergeben, würden durch die Zugabe von z.B. tert. oder quaternäre Ammoniumverbindungen durch Besprühung des Granulates Reibungsaufladewerte und verzögerte Ladungsausgleiche erhalten, die ein einwandfreies wirtschaftliches verarbeiten möglich machen und zwar unabhängig von dem eingesetzten Bindemittel des Pulverlackes.

Das Additiv kann auch einen Erweichungpunkt oberhalb dere Zimmertemperatur haben. In diesem Falle wird das Additiv über den Erweichungpunkt erwärmt und in diesem Zustand aufgetragen. Ein deraetiges Additiv, aber auch eine bei Zimmertemperatur flüssiges Additiv kann feste Bestandteile eines oder mehrerer Additive enthalten oder überhaupt ein Gemisch von den hier aufgeführten Aggregatzuständen.

## Temperaturreduzierung

Aufgrund des Pulverherstellungsverfahrens über den Extruder ist es nicht möglich einen Pulverlack herzustellen der in der Nähe des Erweichungpunktes des eingesetzten Bindemittels im Pulverlack als verarbeiteter Pulverlackfilm thermisch-chemisch zu vernetzen (siehe auch weiter vorstehende Ausführungen). Die Verwendung niedrigst thermisch zu verarbeitender Pulverlacke ist aber von besonderer Bedeutung, da einmal erhebliche Energieeinsparungen möglich sind, ferner heißt dies aber auch eine erhebliche Ausbreitung der Anwendungspalette. Viele Beschichtungsgegenstände (z.B. Kunststoffe, Spanplatten) konnten aufgrund thermischer Labilität nicht dem wirtschaftlichen Pulververarbeitungsprozeß zugeführt werden.

Statt Reduzierung der Einbrenntemperatur, kann natürlich so auch bei bisher gleicher Temperatur aber verkürzter Einbrennzeit die Beschichtungskapazität ohne zusätzliche Investitionen erheblich erhöht werden.

Die bisherige Produktion niedrig-einbrennbarer Pulverlackfilme (um $165_0$C) ist problematisch und immer verbunden mit Filmverlaufsnachteilen, stippenbildung durch Gelteilchen bei der Harz- und Pulverlackherstellung nebst Temperaturanfälligkeit und verkürzter Lagerzeit des so hergestellten Pulverlackes.

Ähnlich wie im vorstehedem Abschnitt "Triboabscheidbare Pulverlacke" können Beschleuniger-Additive in gleichen Aggregatzuständen auf das produzierte Granulat aufgebracht werden, wodurch Beschichtungs-Einbrenntemperturen nahe dem Erweichungpunkt des eingesetzten Bindemittels erhalten werden ohne negative Beeinflussung des Pulverlackfilmes. Bei besonders glattverlaufenden, dekorativen Beschichtungsfilmen können auch reaktiv-schwächere Harze als Bindemittel verwendet werden, die bekanntlich bei der Herstellung stippenfrei gefertigt werden können. Diese aufgebrachten Pulverlacke benötigen zwar unter normalen Voraussetzungen höhere Einbrenntemperaturen, jedoch unter Besprühung des Granulates sind erfahrungsgemäß um $50_0C$ niedrigere Einbrenntemperaturen bei sonst gleicher Einbrennzeit möglich.

Durch die benetzte Kornoberfläche ist auch bei niedrigsten Einbrenndaten keine Filmhaftungsschwierigkeit mit dem Beschichtungsgegenstand erkennbar, was unter Ausschluß einer Benetzung zu Schwierigkeiten führen würde. Als Beschleuniger-Additive sind zum Teil die auf diesem Gebiet bekannten Verbindungen wie z.B. Tert. Amine, Pyrazine, Morpholine zu verwenden. Als vorteilhaft hat sich auch eine Kombination von Additiven ergeben, die mehrere Funktionen ausüben können, z.B. Beschleuniger-Additive mit den Eigenschaften zur Unterstützung der Reibungsaufladung und dere kapillaraktiven Wirkung zur Reduzierung der Bläschenbildung auf porigen Untergründen.

Electromagnetische, Funkfrequenz- und Elektrostatik-Abschirmung

Die Herstellung von Pulverbeschichtungsfilmen mit den Eigenschaften der Verhinderung und/oder der Ableitung elektrostatischer Aufladung (ESD), der Abschirmung gegen elektromagnetischer (EMI) - und der Funkfrequenzstörungen (RFI) ist von besonderer Bedeutung geworden. Zu den technisch und wirtschaftlich interessanten Einsatzgebieten gehören vor allem Gehäuse für Computer, Audio- und Videogeräten, Röntgengeräte, Parabolspiegel für die Luftfahrt, Raumfahrt und für Satelitten. Auch hier wird vorteilhafterweise das Additiv nich einextrudiert, sondern an die Hüllfläche der Pulverlackkornoberfläche gebracht. Die hier mitverwendeten Festteilchen zur Erzielung obiger Eigenschaften können während des Mahlprozesses dem Granulat beigegeben werden, wobei das zusätzliche flüssige Additiv die Aufgabe hat in bezug des Feststoffes, dieses an die Pulverkornoberfläche zu "befestigen", damit während der Verarbeitung beim over spray im zurückgewonnenem Pulverlack sich keine Trennung einstellen kann. Zur Erzielung obiger Eigenschaften kann z.B. Zinkstaub oder aufgedampftes Zink auf einem Hohlkörper in der Größenordnung um 60 Mikron verwendet werden. Unterstützt werden dies Eigenschaften durch Verbindungen leitfähige Additive, nach Möglichkeit in einem Schemlzbereich etwas oberhalb der Zimmertemperatur. Hierdurch wird ein besonders vorteilhaftes Anbacken des Feststoffes am Pulverlackkorn erreicht, der gleichzeitig z.B. bei den metallischen Hohlkörpern die Aufschwimmfähigkeit beim Einbrennprozeß im Film wiederum gewährleistet. Ansonsten können die Aggregatzustände des oder der Additive so zusammengesetzt sein wie im Abschnitt "Triboabscheidbare Pulverlacke" beschrieben.

Strukturpulverlacke

Die Gestaltung von strukturierten Filmoberflächen gestaltet sich bis heute immer noch problematisch. Hauptsächlich werden Strukturpulverlacke heregestellt durch Einarbeitung von thixotropen Materialien, vorwiegend Siliziumdioxid-Produkte. Diese werden einextrudiert oder aber auch eingemischt. Je höher der Anteil an derartigen Mattierungsmitteln einextrudiert sind, desto stärker die Strukturbildung, die etwa einer starken Apfelsinenschale ähnelt. Die Struktur ist nach oben abgerundet. Häufig wirken diese Filme auch so, als ob der Filmverlauf schlecht wäre.

Pulverlacke, denen ähnliche Stoffe beigemischt werden, zeigen eine feine, spitze Struktur, ähneln einem starken Sandpapier-Effekt.

Die dritte Art der Strukturgebung wird erzielt durch Einmischen von relativ geringsten Mengen (um 0,5%) an unverträglichen Bindemitteln, z.B. Celluloseacetobutyrat, in den Pulverlack. Dies dürfte der am meisten verarbeitete Strukturpulverlack sein. Die Strukturart liegt zwischen den zwei vorher genannten Materialien. Des homogene Einmischen dieser geringen Menge an Additiv gestaltet sich mit den zur Verfügung stehenden Herstellungsgeräten äußerst schwierig, da spezifisches Gewicht und Korngröße recht differenziert zum Pulverlack steht, d.h. sehr niedriges spezifisches Gewicht und sehr kleine Korngröße. Unter bestimmten Bedingungen Zz.B. rotierende Bewegung), erhält man nach einer kurzen Mischphase, gleich wieder eine Entmischung. Auch sorgfältig gemischter Pulverlack kann durch längere Transportwege (rüttelnde Bewegung) teilweise entmischt werden. Ähnlich verhält es sich im Fluidisierungs-Pulverlack-Entnahmebehälter. Durch längere Fluidisierungszeiten oder unterschiedliche Fluidisierungszeiten kann das Strukturmittel nach oben abgeschieden werden. Die Folge ist, zuerst eine schwächere bis löchrige Filmstruktur, dann bei Konzentrierung eine Verlaufsverbesserung. Das Gegenteil von dem, was man haben wollte.

Zur Abstellung dieser und ähnlicher Mängel kann man so verfahren analog der Beschreibung im Abschnitt: "Electromagnetische, Funkfrequenz- und Elektrostatik-Abschirmung". Man erhält während des gesamten Beschichtungsvorganges einschließlich der Verarbeitung von sogenannten Rückgewinnungspulver, gleichmäßige Strukturfilme.

Filmverlauf

Die Mehrzahl der Pulverlackfilme zeigt eine leichte Apfelsinenstruktur. Diese Filmoberfläche ist typisch für Pulverlacke. Dem Pulverlackhersteller sind hier Grenzen vorgegeben, den Filmveerlauf noch weiter verbessern zu können. Weitere, höhere Zugaben an verlaufmitteln würden dem ausgehärtetem Film eine klebrige Oberfläche verleihen, und auch der Pulverlack würde in der Lagerbeständigkeit nicht stabil sein, d.h. es stellt sich Kulmpenbildung ein. Der Pulverlack wäre nicht mehr oder nur unter großen Schwierigkeiten (Verstopfungen der Geräte) verarbeitbar.

Bedingt duch den Pulverlackherstellungsprozeß muß der Pulverlackhersteller bereits soviel Verlaufmittel zugeben, der ausreichend ist, an der Pulverkornoberfläche eine Oberflächenspannung zu erzeugen, die ein porenfreies Verlaufen möglich macht. D.h. durch den Herstellungsprozeß ist das Pulverkorn "durchtränkt" mit Verlaufmittel. Es ist tatsächlich übersättigt. Benötigt würde nur ein Oberflächenbenetzung des Pulverkornes. Ferner kann das sonst zuviel an Verlaufmittel während der Schmelzphase bei beginnender Filmvernetzung nicht an die Filmoberfläche gelangen und so die Filmvernetzung instabil machen.

Grundsätzlich geht man auch hier so vor wie in den oben beschriebenen Abschnitten berichtet. Um zu extrem glatten Oberflächenfilmen zu gelangen, werden die sonst bekannten Materialien verwendet in gemischen zum teil in Verbindung mit kapillaraktiven Netzmitteln, bei der Verarbeitung im Triboverfahren als kationaktiv vorliegend.

Mattierte Pulverlackfilme

Wenn nicht durch Unverträglichkeit mindestens zweier Bindemittel in unterschiedlicher Raktivität im Pulverlackgemisch, werden die Pulverlacke mattiert mit hauptsächlich Polyolefine und siliziumhaltige Mattierungsmittel.

Bei der zuerst genannten Mattierungsart, werden in der Regel zur Verbesserung der Schreib- und Gleitfähigkeit geringfügige Polyolefinmengen hinzugegeben. Dasselbe gilt auch für siliziumhaltige Mattierungsmittel. Für jede Mattierungsstufe wird ein separater Pulverlack benötigt.

Bei der zuerst erwähnten Mattierungsart werden mindestens zwei Pulverlacke separat hergestellt, gemischt und dann verarbeitet. Obwohl die elektrischen Aufladungsverhältnisse etwa gleich sind, können sich doch besonders bei einem höheren over spray Phasentrennungen ergeben. Die Folge ist ein Pulverlackfilm mit unterschiedlichen Glanzgraden. Dieser nicht gewünschte Effekt wird bei den nachfolgend genannten Mattierungsarten nicht erhalten, jedoch wird auch kein so niedriger Matteffekt mit gutem Filmverlauf erzielt.

Bei Verwendung von Polyolefinen als Mattiersungsmittel gibt es Haftungsschwierigkeiten zwischen Film und Beschichtungsgegenstand, wenn das Polyolefin während der thermischen Schmelzphase nicht genügend hoch an die Filmoberfläche kommen kann. Hier is das Pulverkorn, ähnlich wie im Abschnitt: "Filmverlauf", "durchtränkt", d.h. übersättigt, bedingt duch den bisherigen Pulverherstellungsprozeß. Die gewünschte Mattierungswirkung verläuft deshalb in vielen Fällen nicht befriedigen. Hier schafft des erfindungsgemäße Verfahren Abhilfe, da für die Mattierungswirkung nur der Teil an Polyolefin mattiert, der auch tatsächlich an die Oberfläche schwimmt. Deshalb ist auch hier nur eine Oberflächenbenetzung des Pulverkornes von Nöten. Erfahrungsgemäß trennt sich das Polyolefin auch schneller vom Pulverkorn als aus dem einextrudierten Material.

Grundsätzlich geht man bei all diesen Mattierungsmöglichkeiten so vor, wie in den vorher geschilderten, erfindungsgemäßen Verfahren.

Die Aufzählung dieser vorgenannten Beeinflussungseigenschaften des Pulverlackkornes durch Besprühung des Granulates oder des Vorproduktes, erhebt keinen Anspruch auf Vollständigkeit, sondern soll grundsätzlich die Eigenschaft der Beeinflussung aufzeigen.

Verfahrensweise

In Figur 2 bis 4 der Zeichnung, kann die Zudosierung der Additive zur entsprechenden Eigenschaftveränderung oder Optimierung der Pulverlackeigenshaften erfolgen.

Beispiele

Beispiel 1: Additivzugabe zur Möglichkeit und/oder Optimierung der Reibungsaufladung und der Erhöhung der chemischen Reaktivität der zu verarbeitenden Pulverlacke.

Ein Gemisch von z.B. Lauryltrialkylammoniumsulfat mit einem tert. Amin (z.B. Härter HY 960; CIBA-GEIGY) werden in Figur 4 im Bereich 9 der Zeichnung eingesprüht. Der normale Mahlvorgang wird ansonsten nicht gestört oder verändert.

Beispie 2: Erhöhung der chemischen Reaktivität

Das bei zimmertemperatur gerade noch feste Produkt, wie z.B. 2 E 4 MZ-CN ](1-cyanoäthyl-2-äthyl-4-methylimidazol; Fa. Anchor Chemical), wird in einem mit Spruhdüsen versehen Behälter erwärmt und dann in Figur in den Be reich 1 der Zeichnung eingesprüht. Der normale Mahlvorgange wird ansonsten nicht gestört oder verändert.

Beispiel 3:

Elektromagnetische, Funkfrequenz- und Elektrostatik-Abschirmung Ein leitfähiges Pigment, wie z.B. Zinkstaub, wird wahlweise in Figur 2 im Bereich 1 oder gleich in Figur 2 nach 2 der Zeichnung auf die noch warme Schmelze zum Zwecke des Anklebens durch Sprühen aufgebracht. Die Weiterverarbeitung wird nicht verändert.

Beispiel 4: Herstellung von Strukturpulverlacken

Eine Lösung die die Pulverschmelze nicht oder kaum anlöst odeer eine Dispersion auf Basis Celluloseacetobutyrat mit Anteilen an RESIFLOW FK 70 (Fa.WORLE) zur gleichzeitigen Vorbeugung gegen Nadelstiche im Film wird in Figure 2 im Bereich 1 der Zeichnung auf die warme Schmelze aufgesprüht. Der weitere Produktionsvorgang wird nicht verändert.

Beispiel 5: Verbesserung des Filmverlaufs

Ein Gemisch von BAYSILONE-Lackadditiv PL (BAYER) und PERENOL F 40 (HENKEL) wird in einem Behälter mitels Austragsdüsen in Figur im Bereich 1 der Zeichnung auf die noch warme Schmelze aufgesprüht, ohne das der sonst üblich anschließende weitere Verarbeitungtungsprozeß gestört oder behindert wird.

Beispiel 6: Mattierte Pulverlackfilme

In Figur 2 im Bereich direkt vor der Granuliervorrichtung (4) wird mittels Sprühvorrichtung eine Mattierungsdispersion wie LANCO-GLIDD KX (Polyäthylen-Dispersion; Fa.LANGER) im Gemisch mit einer AEROSOL-DISPERSION K 328 (DEGUSSA) aufgetragen. Anschließend erfolgt der weitere bekannte Pulverherstellungsprozeß.

## Ansprüche

Verfahren zur Herstellung von Pulverlacken, wobei die Beschichtungspulver aus bekannten Rohstoffen hergestellt und während des bekannten Produktionsprozesses gefertigt werden, dadurch gekennzeichnet, daß nach Verlassen der Schmelze aus dem Extruder bis hin zur Vermahlung durch gesonderte Vorrichtung (siehe Zeichnung) eine flüssigkeit und/oder Flüssigkeits-Feststoffgemisch auf die Schmelze und/odere das Granulat aufgebracht wird.

Figur 1    Figur 2    Figur 3    `Figur 4

EP 0 397 923 A2

Figur 1 = Extruder

    Bereich 1 = ausfließende Pulverlackschmelze

Figur 2 = Kühlband

    Bereich 1 = Pulverlackschmelze wird durch mehrere Kühlwalzen dünn gewälzt und gekühlt

        2 = Kühlwalzen

        3 = weitere Abkühlung der Pulverlackschmelze

        4 = Granuliervorrichtung

Figur 3 = Auffangbehälter des Granulats

Figur 4 = Mahlaggregat

    Bereich 1= Mahlkammer des zugeführten Granulates

        2= Zyklon mit Pulveraustritt